# EUROPEAN PATENT APPLICATION

(11) **EP 4 181 427 A1**
(43) Date of publication of application: **17.05.2023**
(21) Application number: 21848829.4
(22) Date of filing: 20.07.2021
(51) Int. Cl.: H04B 10/118

(54) **SERVICE SATELLITE OPERATION STATE DIAGNOSIS METHOD, AND RELATED APPARATUS**

(30) Priority: 28.07.2020 CN 202010749458
(71) Applicant: Huawei Technologies Co., Ltd., Shenzhen, Guangdong 518129 (CN)
(72) Inventor: ZHANG, Haibo, Shenzhen, Guangdong 518129 (CN); WANG, Bin, Shenzhen, Guangdong 518129 (CN); QIAO, Yunfei, Shenzhen, Guangdong 518129 (CN)
(74) Representative: Maiwald GmbH
(86) International application number: PCT/CN2021/107409
(87) International publication number: WO 2022/022336

(57) **Abstract**

Embodiments of this application provide a service satellite running status diagnosis method and a related apparatus. The method includes: A ground user terminal detects attribute information of a first service beam, where the first service beam is a beam transmitted by a service satellite, and if the attribute information of the first service beam is abnormal, the ground user terminal generates a first evaluation report of the first service beam, and the ground user terminal sends the first evaluation report to a satellite controller; the satellite controller receives a plurality of first evaluation reports sent by a plurality of ground user terminals, and generates a diagnosis report of the service beam based on the plurality of first evaluation reports. In addition, the satellite controller may further communicate with the service satellite to obtain a second evaluation report used to represent a running status of the service satellite. The satellite controller sends the diagnosis report and/or the second evaluation report to a ground monitoring station. According to embodiments of this application, correctness and efficiency of service satellite running status diagnosis are improved.

## Description

This application claims priority to Chinese Patent Application No. 202010749458.2, filed with the China National Intellectual Property Administration on July 28, 2020 and entitled "SERVICE SATELLITE RUNNING STATUS DIAGNOSIS METHOD AND RELATED APPARATUS", which is incorporated herein by reference in its entirety.

### TECHNICAL FIELD

This application relates to the field of satellite communication technologies, and in particular, to a service satellite running status diagnosis method and a related apparatus.

### BACKGROUND

With the development of science and technology, satellite communication technologies have also been developed rapidly. The satellite communication technology is communication between radio communication stations on the earth by using a satellite as a relay. In this satellite communication technology, a large part is used for environmental monitoring, meteorological service, stereoscopic plotting, ocean observation, and other purposes, providing users with a large amount of required data from the perspective of space. As the satellite communication technology plays an increasingly important role in modern communication technologies, satellite running status diagnosis is also rapidly developed, and plays a vital role for security of the satellite communication technology.

At present, the running status of the satellite is mainly determined by using information obtained by a monitoring system of the satellite or information obtained by a dedicated ground monitoring station. However, limited by factors such as costs, a volume, and power consumption of the satellite, the monitoring system of the satellite has a simple structure and can only roughly monitor an average transmit power of the satellite, and determining accuracy is low. In addition, based on operating laws of the earth and the satellite, the ground monitoring station can only detect, in real time, a beam area covering the ground monitoring station within a period of time, and needs to perform continuous monitoring. A monitoring result can be obtained only when the ground monitoring station detects each area of the beam (for example, for a beam with a frequency range of 25 GHz to 29 GHz, it is considered, only when the ground user terminal obtains data of the beam in the foregoing frequency range, that each area of the beam is detected). Because the ground monitoring station faces massive satellites and massive beam clusters, a monitoring periodicity is long, and workload is heavy. Consequently, monitoring efficiency is low.

### SUMMARY

Embodiments of this application disclose a service satellite running status diagnosis method and a related apparatus, so as to improve correctness and efficiency of diagnosis.

According to a first aspect, an embodiment of this application provides a service satellite running status diagnosis method. The method includes: A first device receives a first service beam sent by a service satellite; the first device detects attribute information of the first service beam, where the attribute information includes one or more of a carrier power, a bandwidth, a carrier-to-noise ratio, and a frequency; if the attribute information of the first service beam is abnormal, the first device generates a first evaluation report of the first service beam, where the evaluation report includes abnormal information of the first service beam; and the first device sends the first evaluation report to a satellite controller, where the satellite controller is configured to generate a diagnosis report of the first service beam based on a plurality of first evaluation reports from a plurality of first devices, and the diagnosis report is used by a ground monitoring station to confirm a running status of the service satellite.

It can be learned that, the plurality of first devices generate the first evaluation reports based on some or all of detected abnormal attribute information of the first service beam, and send the first evaluation reports to the maintenance controller. The maintenance controller generates the diagnosis report based on the received plurality of first evaluation reports, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

In an optional solution of the first aspect, the plurality of evaluation reports are used to describe some or all of abnormal information of a same first service beam.

In another optional solution of the first aspect, the attribute information includes a carrier power, and that the first device detects attribute information of the first service beam includes: The first device detects an amplitude of the first service beam; and the first device calculates the carrier power of the first service beam based on the amplitude of the first service beam.

In an optional solution of the first aspect, the carrier power is an average carrier power, or the carrier power is an instantaneous carrier power.

It can be learned that, compared with an average transmit power detected by a monitoring system of the service satellite, the method can detect the instantaneous carrier power of the first service beam (in this case, a calculation time that is of the carrier power of the beam and that is set by the ground user terminal is short compared with that of the average transmit power, and the carrier power may be considered as the instantaneous carrier power of the beam), so that correctness of service satellite running status diagnosis is improved.

In another optional solution of the first aspect, if a target parameter in the attribute information of the first service beam is less than a reference threshold, and a difference between the target parameter and the reference threshold is not less than a first threshold, the attribute information of the first service beam is abnormal, and the target parameter includes the carrier-to-noise ratio or the carrier power, and the reference threshold is a manually set value or a historical target parameter.

In another optional solution of the first aspect, that the first device sends the evaluation report to a satellite controller includes: If a quantity of evaluation reports of the first service beam reaches a second threshold, the first device sends the evaluation report of the first service beam to the satellite controller.

According to a second aspect, an embodiment of this application provides a service satellite running status diagnosis method, including: A satellite controller receives a plurality of first evaluation reports of a same first service beam that are separately sent by a plurality of first devices, where the first evaluation report is a report generated by the first device based on the first service beam sent by a service satellite, and the first evaluation report includes abnormal information of the first service beam; the satellite controller generates a diagnosis report of the first service beam based on the plurality of first evaluation reports of the first service beam; and the satellite controller sends the diagnosis report of the first service beam to a ground monitoring station, where the diagnosis report is used by the ground monitoring station to confirm a running status of the service satellite.

It can be learned that, the maintenance controller generates the diagnosis report based on the received plurality of first evaluation reports that record the abnormal information of the first service beam, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

In an optional solution of the second aspect, the plurality of evaluation reports are used to describe some or all of abnormal information of a same first service beam.

In another optional solution of the second aspect, the method further includes: The satellite controller obtains, by using a communication link, a second evaluation report that is of the service beam and that is sent by the service satellite, where the second evaluation report is a report that is generated by the service satellite based on a transmission status of the first service beam and that is used to represent a running status of the service satellite.

In another optional solution of the second aspect, after the satellite controller obtains, by using the communication link, the second evaluation report that is of the first service beam and that is sent by the service satellite, the method further includes: The satellite controller sends the second evaluation report of the first service beam to the ground monitoring station.

It can be learned that, in the method, the second evaluation report used to represent the running status of the service satellite and the diagnosis report used to confirm the abnormal running status of the service satellite are both sent to the ground monitoring station, so that the running status of the service satellite is analyzed more accurately.

In another optional solution of the second aspect, that the satellite controller generates a diagnosis report of the first service beam based on the plurality of first evaluation reports of the first service beam includes: The satellite controller filters data in the plurality of first evaluation reports of the first service beam based on an external factor, to obtain a target evaluation report; and the satellite controller generates the diagnosis report of the first service beam based on the target evaluation report.

In another optional solution of the second aspect, the external factor includes a weather factor, and the target evaluation report is the first evaluation report obtained in non-inclement weather.

It can be learned that, in the method, the first evaluation report in a case of inclement weather is filtered out, and a problem that abnormal information occurs on the first service beam due to a weather factor is eliminated, so that correctness of service satellite running status diagnosis is improved.

In another optional solution of the second aspect, the satellite controller and the service satellite are a same satellite.

According to a third aspect, an embodiment of this application provides a service satellite running status diagnosis apparatus, including: a first receiving unit, configured to receive a first service beam sent by a service satellite; a detection unit, configured to detect attribute information of the first service beam, where the attribute information includes one or more of a carrier power, a bandwidth, a carrier-to-noise ratio, and a frequency; a first generation unit, configured to: if the attribute information of the first service beam is abnormal, generate a first evaluation report of the first service beam, where the evaluation report includes abnormal information of the first service beam; and a first sending unit, configured to send the first evaluation report to a satellite controller, where the satellite controller is configured to generate a diagnosis report of the first service beam based on a plurality of first evaluation reports from a plurality of first devices, and the diagnosis report is used by a ground monitoring station to confirm a running status of the service satellite.

It can be learned that, the plurality of apparatuses generate the first evaluation reports based on some or all of detected abnormal attribute information of the first service beam, and send the first evaluation reports to the maintenance controller. The maintenance controller generates the diagnosis report based on the received plurality of first evaluation reports, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

In an optional solution of the third aspect, the plurality of evaluation reports are used to describe some or all of abnormal information of a same first service beam.

In another optional solution of the third aspect, the attribute information includes a carrier power, and the detection unit is specifically configured to: detect an amplitude of the first service beam; and calculate the carrier power of the first service beam based on the amplitude of the first service beam.

In another optional solution of the third aspect, the carrier power is an average carrier power, or the carrier power is an instantaneous carrier power.

It can be learned that, compared with an average transmit power detected by a monitoring system of the service satellite, the method can detect the instantaneous carrier power of the first service beam (in this case, a calculation time that is of the carrier power of the beam and that is set by the ground user terminal is short compared with that of the average transmit power, and the carrier power may be considered as the instantaneous carrier power of the beam), so that correctness of service satellite running status diagnosis is improved.

In another optional solution of the third aspect, if a target parameter in the attribute information of the first service beam is less than a reference threshold, and a difference between the target parameter and the reference threshold is not less than a first threshold, the attribute information of the first service beam is abnormal, and the target parameter includes the carrier-to-noise ratio or the carrier power, and the reference threshold is a manually set value or a historical target parameter.

In another optional solution of the third aspect, the sending unit is specifically configured to: if a quantity of evaluation reports of the first service beam reaches a second threshold, send the evaluation report of the first service beam to the satellite controller.

According to a fourth aspect, an embodiment of this application provides a service satellite running status diagnosis apparatus, including: a second receiving unit, configured to receive a plurality of first evaluation reports of a same first service beam that are separately sent by a plurality of first devices, where the first evaluation report is a report generated by the first device based on the first service beam sent by a service satellite, and the first evaluation report includes abnormal information of the first service beam; a second generation unit, configured to generate a diagnosis report of the first service beam based on the plurality of first evaluation reports of the first service beam; and a second sending unit, configured to send the diagnosis report of the first service beam to a ground monitoring station, where the diagnosis report is used by the ground monitoring station to confirm a running status of the service satellite.

It can be learned that, the apparatus generates the diagnosis report based on the received plurality of first evaluation reports that record the abnormal information of the first service beam, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

In an optional solution of the fourth aspect, the plurality of evaluation reports are used to describe some or all of abnormal information of a same service beam.

In another optional solution of the fourth aspect, the apparatus further includes: an obtaining unit, configured to obtain, by using a communication link, a second evaluation report that is of the first service beam and that is sent by the service satellite, where the second evaluation report is a report that is generated by the service satellite based on a transmission status of the first service beam and that is used to represent a running status of the service satellite.

In another optional solution of the fourth aspect, the apparatus further includes: a third sending unit, configured to: after the obtaining unit obtains, by using the communication link, the second evaluation report that is of the first service beam and that is sent by the service satellite, send the second evaluation report of the first service beam to the ground monitoring station.

It can be learned that, in the method, the second evaluation report used to represent the running status of the service satellite and the diagnosis report used to confirm the abnormal running status of the service satellite are both sent to the ground monitoring station, so that the running status of the service satellite is analyzed more accurately.

In another optional solution of the fourth aspect, the generation unit is specifically configured to: filter data in the plurality of first evaluation reports of the first service beam based on an external factor, to obtain a target evaluation report; and generate the diagnosis report of the first service beam based on the target evaluation report.

In another optional solution of the fourth aspect, the external factor includes a weather factor, and the target evaluation report is the first evaluation report obtained in non-inclement weather.

It can be learned that, in the method, the first evaluation report in a case of inclement weather is filtered out, and a problem that abnormal information occurs on the first service beam due to a weather factor is eliminated, so that correctness of service satellite running status diagnosis is improved.

In another optional solution of the fourth aspect, the apparatus and the service satellite are a same satellite.

According to a fifth aspect, an embodiment of this application provides a terminal, including a communication interface, a memory, and a processor. The communication interface is used for data communication, the memory is configured to store a computer program, and the processor is configured to run the computer program, so that the terminal performs the service satellite running status diagnosis method according to any one of the first aspect or the optional solutions of the first aspect.

According to a sixth aspect, an embodiment of this application provides a satellite controller, including a communication interface, a memory, and a processor. The communication interface is used for data communication, the memory is configured to store a computer program, and the processor is configured to run the computer program, so that the terminal performs the service satellite running status diagnosis method according to any one of the second aspect or the optional solutions of the second aspect.

According to a seventh aspect, an embodiment of this application provides a computer-readable storage medium. The computer-readable storage medium stores a computer program. When the computer program is processed and run, the method described according to any one of the first aspect or the optional solutions of the first aspect is implemented.

According to an eighth aspect, an embodiment of this application provides a computer program product. When the computer program product runs on a processor, the method described according to any one of the first aspect or the optional solutions of the first aspect in embodiments of this application is implemented.

It may be understood that, the terminal provided in the fifth aspect, the satellite controller provided in the sixth aspect, the computer-readable storage medium provided in the seventh aspect, and the computer product provided in the eighth aspect are all configured to perform the service satellite running status diagnosis method according to any one of the first aspect, the second aspect, the optional solutions of the first aspect, or the optional solutions of the second aspect. Therefore, for beneficial effects that can be achieved by the terminal, the satellite controller, the computer-readable storage medium, and the computer product, refer to the beneficial effects in the service satellite running status diagnosis method according to any one of the first aspect, the second aspect, the optional solutions of the first aspect, or the optional solutions of the second aspect. Details are not described herein again.

### BRIEF DESCRIPTION OF DRAWINGS

The following describes the accompanying drawings used in embodiments of this application.
FIG. 1 is a schematic diagram of a scenario of a service satellite running status diagnosis method according to an embodiment of this application;
FIG. 2 is a schematic diagram of a scenario of service satellite running status diagnosis according to an embodiment of this application;
FIG. 3 is a schematic flowchart of a service satellite running status diagnosis method according to an embodiment of this application;
FIG. 4 is a schematic diagram of a structure of a beamforming transmitter according to an embodiment of this application;
FIG. 5 is a schematic diagram of a structure of a service satellite radio frequency system according to an embodiment of this application;
FIG. 6 is a schematic diagram of a hardware structure of a signal evaluation module according to an embodiment of this application;
FIG. 7 is a schematic diagram of a software structure of a signal evaluation module according to an embodiment of this application;
FIG. 8 is a schematic diagram of another scenario of service satellite running status diagnosis according to an embodiment of this application;
FIG. 9 is a schematic diagram of a scenario of communication between satellite clusters including a plurality of satellites according to an embodiment of this application;
FIG. 10 is a schematic diagram of a scenario in which a ground monitoring station obtains a first evaluation report and a second evaluation report according to an embodiment of this application;
FIG. 11 is a schematic diagram of a structure of a service satellite running status diagnosis apparatus according to an embodiment of this application;
FIG. 12 is a schematic diagram of a structure of another service satellite running status diagnosis apparatus according to an embodiment of this application;
FIG. 13 is a schematic diagram of a structure of another service satellite running status diagnosis apparatus according to an embodiment of this application; and
FIG. 14 is a schematic diagram of a structure of another service satellite running status diagnosis apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

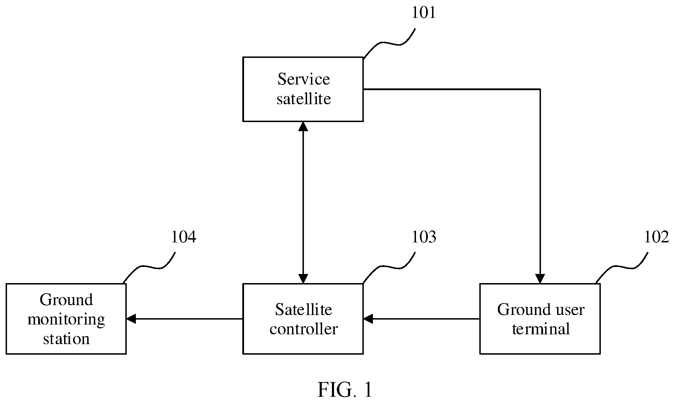

FIG. 1 is a schematic diagram of a structure of a service satellite running status diagnosis method according to an embodiment of this application. The structure includes a service satellite 101, a ground user terminal 102, a satellite controller 103, and a ground monitoring station 104. Optionally, if the satellite controller 103 may be one satellite, the satellite controller 103 and the service satellite 101 may be a same satellite, or may be two different satellites. If the satellite controller 103 is a satellite cluster including a plurality of satellites, the service satellite 101 may be a satellite in the satellite cluster, or may not be a satellite in the satellite cluster.

The service satellite 101 transmits a first service beam to the ground user terminal 102. After receiving the first service beam, the ground user terminal 102 detects and evaluates attribute information of the first service beam, generates a first evaluation report based on an evaluation result, and then sends the first evaluation report to the satellite controller 103. The satellite controller receives the first evaluation report and performs summarization and filtering based on the first evaluation report, to obtain a diagnosis report of the first service beam. In addition, the satellite controller 103 also communicates with the service satellite 101, and obtains a second evaluation report generated by the service satellite based on a transmission status of the service beam. The satellite controller 103 sends the diagnosis report and/or the second evaluation report to the ground monitoring station 104.

It can be learned from the description of FIG. 1 that, compared with an existing method in which the service satellite performs detection based on a detection system of the service satellite and performs detection by using the ground monitoring station, the ground user terminal and the satellite controller participate in the process of service satellite running status diagnosis and share detection pressure of the service satellite and the ground monitoring station, so that efficiency of service satellite running status diagnosis is improved.

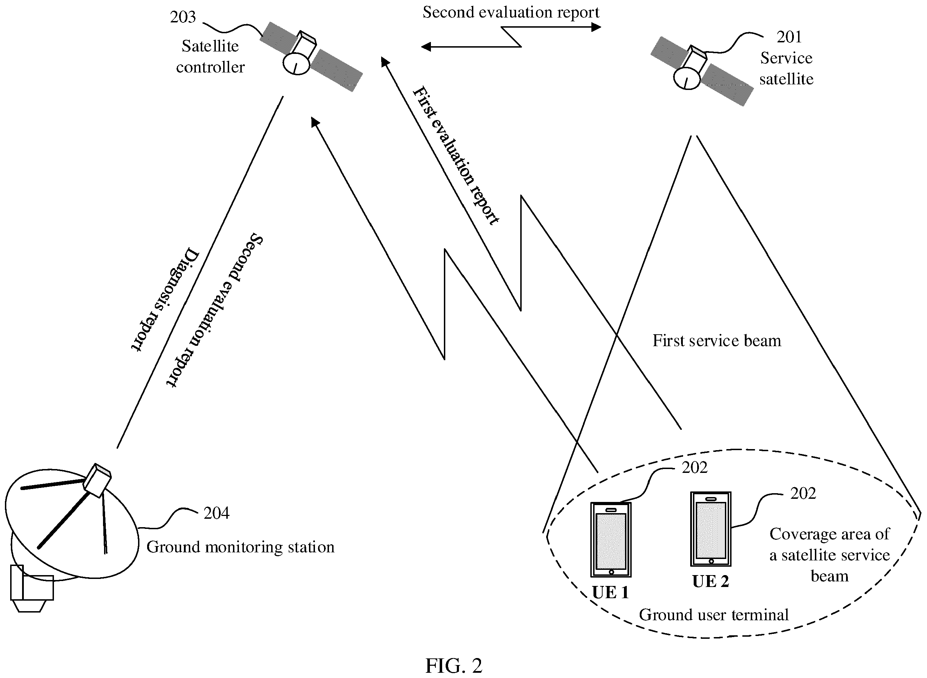

FIG. 1 describes the schematic diagram of the structure of the service satellite running status diagnosis method. The following describes a scenario of the schematic diagram of the structure in detail. FIG. 2 is a schematic diagram of a scenario of service satellite running status diagnosis according to an embodiment of this application. The scenario includes a service satellite 201, a ground user terminal 202, a satellite controller 203, and a ground monitoring station 204. The ground user terminal 202 may be a smartphone, a notebook computer, a tablet computer, a desktop computer, a satellite receiver, or another electronic device.

Specifically, the service satellite 101 may transmit different beams, for example, a beam 1, a beam 2, and a beam 3. Different beams may be distinguished by using different identity documents (identity document, ID). For example, an ID of the beam 1 is vcxj01, an ID of the beam 2 is vcxj02, and an ID of the beam 3 is vcxj03. The service satellite running status diagnosis method herein is described by using one beam as an example. For ease of description, the beam is subsequently referred to as a first service beam.

The service satellite 201 transmits the first service beam to the ground user terminal 202, and the ground user terminal 202 receives some or all of the first service beams. For example, the ground user terminal receives information about some frequencies of the first service beam or receives information about all the frequencies of the first service beam. The ground user terminal detects attribute information (for example, a carrier power, a bandwidth, a carrier-to-noise ratio, and a frequency) of the first service beam. If the attribute information of the first service beam is abnormal (for example, the carrier power or the carrier-to-noise ratio of the first service beam is less than a reference threshold of the first service beam, and a difference between the carrier power or the carrier-to-noise ratio and the reference threshold is not less than a first threshold), the ground user terminal generates a first evaluation report of the first service beam and stores the first evaluation report. The carrier power may be an average carrier power, or may be an instantaneous carrier power (when a calculation time of the carrier power is quite short, the carrier power obtained through calculation in this case may be considered as the instantaneous power). The reference threshold is a preset value or a historical target parameter. The first evaluation report includes abnormal attribute information, a detection time, and a detection location (for example, a ground location of the ground user terminal). When a quantity of first evaluation reports stored by the ground user terminal reaches a second threshold (the second threshold is a preset value), the plurality of first evaluation reports are sent to the satellite controller 203. The plurality of first evaluation reports may be sent by one ground user terminal, or may be sent by a plurality of ground user terminals.

The satellite controller 203 receives the plurality of first evaluation reports sent by the ground user terminal, filters the plurality of first evaluation reports based on weather records stored by the satellite controller 203, and generates a diagnosis report of the first service beam. For example, the satellite controller filters out attribute information in inclement weather in the first evaluation report (to eliminate a case in which attribute information abnormality is caused by a weather factor), to obtain the first evaluation report in non-inclement weather. In addition, the satellite controller 203 obtains a second evaluation report by using a communication link. The second evaluation report is generated by the service satellite 201 based on a transmission status of the first service beam.

The satellite controller 203 sends the diagnosis report and the second evaluation report to the ground monitoring station 204. The diagnosis report is used by the ground monitoring station 104 to confirm a running status of the service satellite, and the second evaluation report is used to represent the running status of the service satellite.

It should be noted that, the ground user terminal may be a plurality of ground user terminal devices, and an operation performed by the ground user terminal is applicable to any one of the plurality of terminal devices. The service satellite may transmit a plurality of first service beams synchronously, or may transmit a plurality of service beams asynchronously, and the description of the first service beam in FIG. 2 is also applicable to other first service beams.

From the scenario diagram described in FIG. 2, it can be learned that, the plurality of ground user terminals can detect, based on the received some or all of the service beams transmitted by the service satellite, an abnormality of the attribute information of the some or all of the service beams, and generate the first evaluation report based on the abnormal attribute information (for example, the carrier power, the carrier-to-noise ratio, the bandwidth, and the frequency), to avoid a problem that a quick monitoring result cannot be obtained because the ground monitoring station does not receive all the beams, share detection pressure of the ground monitoring station for massive satellites and massive beams, and improve efficiency of service running status diagnosis. In addition, compared with the average transmit power detected by the monitoring system of the service satellite, the carrier power in the attribute information in the first evaluation report may be the instantaneous power of the service beam (in this case, a calculation time that is of the carrier power of the beam and that is set by the ground user terminal is short compared with that of the average transmit power, and the carrier power may be considered as the instantaneous carrier power of the beam), so that correctness of service satellite running status diagnosis is improved. In addition, the maintenance controller filters the evaluation report based on the stored weather records, retains attribute information in the first evaluation report in non-inclement weather, and eliminates a case in which attribute information abnormality is caused by interference of the weather factor, so that accuracy of the detection result is enhanced.

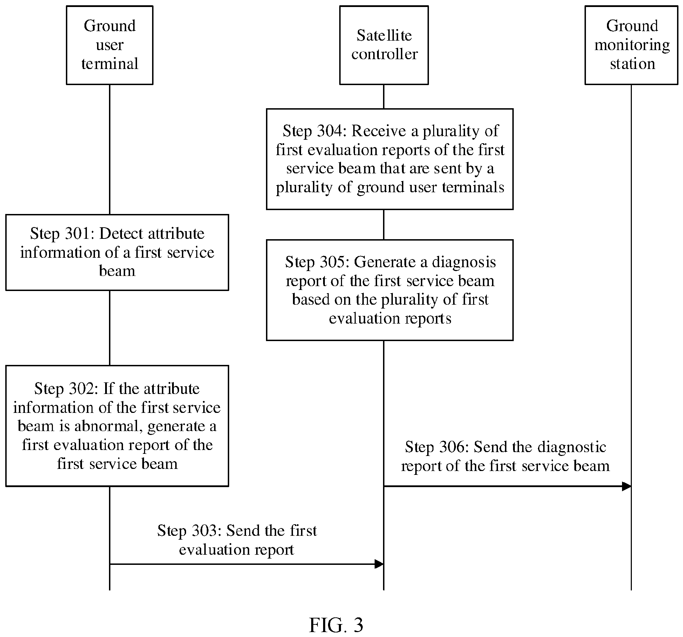

FIG. 3 is a schematic flowchart of a service satellite running status diagnosis method according to an embodiment of this application. The method includes but is not limited to the following steps.

Step S301: A ground user terminal detects attribute information of a first service beam.

The ground user terminal may be a smartphone, a notebook computer, a tablet computer, a desktop computer, a satellite receiver, or another electronic device. The attribute information includes one or more of a carrier power, a bandwidth, a carrier-to-noise ratio, and a frequency. The first service beam is a beam transmitted by a service.

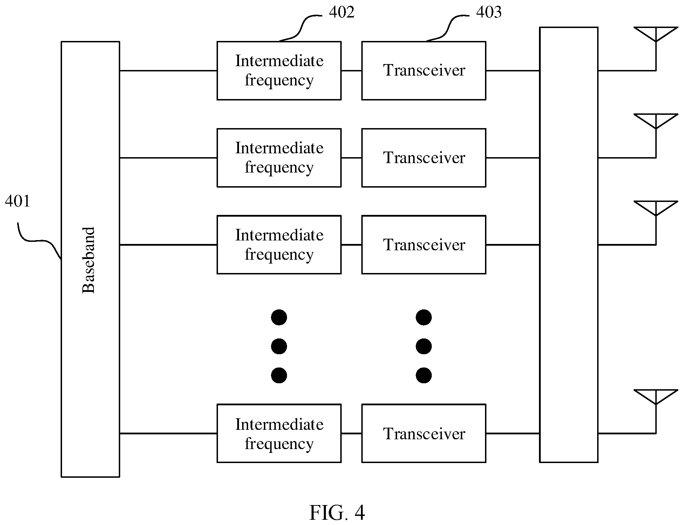

Before detecting the attribute information of the first service beam, the ground user terminal receives the first service beam transmitted by the service satellite. That the service satellite sends the first service beam is a satellite communication service, and the satellite communication service may provide a plurality of services (for example, a plurality of fields such as scientific research, cosmic observation, meteorological observation, long-distance communication, and mobile communication) based on characteristics of the satellite communication service and user requirements. The satellite communication service is a service such as a voice, data, or a video image provided by a satellite communication network including a service satellite and an earth station. The earth station is generally a fixed earth station, a movable earth station, or a mobile or handheld user terminal. In a beamforming technology, different data streams can be mapped to a plurality of high-gain beams, a specific spatial domain is covered, and a shape and a direction of a beam can be adjusted based on a requirement. The beamforming technology is a key technology for the satellite communication service. FIG. 4 is a schematic diagram of a structure of a beamforming transmitter according to this application. The schematic diagram includes a baseband 401, an intermediate frequency 402, and a transceiver 403. After the baseband 401 passes the first service beam through the intermediate frequency 402 and the transceiver 403, an antenna outputs a signal of a particular amplitude and phase, and transmits the signal into the spatial domain. A plurality of beams (namely, a plurality of first service beams) transmitted by a plurality of antennas interfere with each other, to form required directional beams. Because a working environment of the service satellite is worse than that of the ground, the transceiver of the service satellite has a problem of performance degradation with the passage of time and an increase in a quantity of times of temperature cycling of the transceiver. The degradation problem of the transceiver directly leads to a gradual decrease in a saturated transmit power and power added efficiency of a power amplifier of the service satellite, and a probability of a sudden failure is higher. For example, in general, when the quantity of times of temperature cycling is fixed, as an input power increases, an output power gradually increases and finally tends to be stable. As a result, the power added efficiency (the power added efficiency is related to the input power and the output power) encounters a phenomenon of first increasing and then decreasing. When the input power is fixed, a larger quantity of times of temperature cycling leads to a lower output power and lower corresponding power added efficiency. After performance of the transceiver is degraded, beamforming is affected. After a margin is exceeded, problems such as a beam direction deviation and that an equivalent isotropically radiated power (equivalent isotropically radiated power, EIRP) cannot meet a design requirement occur. This affects normal services and even affects normal surrounding beams.

When a device in the service satellite is degraded or faulty, the service beam transmitted by the service satellite is abnormal and also affects surrounding beams. Therefore, service satellite running status diagnosis draws increasing attention, and plays a key role in the satellite communication technology.

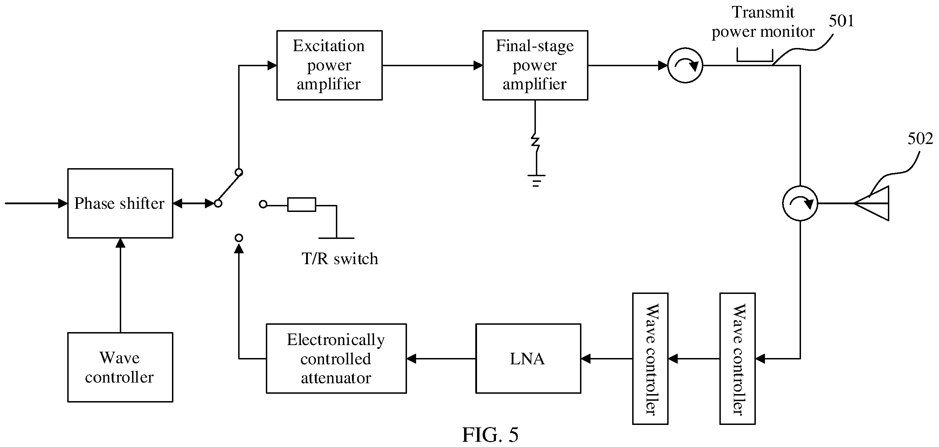

Specifically, the service satellite transmits information with the ground user terminal by using the first service beam. Based on different spectrum division ranges, the first service beams may be classified into beams in different frequency bands (for example, a beam in a frequency band (140 MHz to 400.5 MHz) of the first service beam (this beam is mainly used for asynchronous satellite communication services including low earth orbit satellites) and a beam in a frequency band (21 GHz to 25 GHz) of a beam 2 (a transmission loss of this frequency band is high, and transmission is seriously affected by rainfall and hydrometeors in the atmosphere. However, due to a wide available frequency band, this frequency band is considered to be used by a broadband radio wave multimedia satellite at present)). The service satellite sends the first service beam to the ground user terminal. The first service beam is attenuated (due to a loss of the service beam in the cosmic space and atmosphere). Then, the first service beam finally reaches the ground user terminal at the receive end. FIG. 5 is a schematic diagram of a structure of a service satellite radio frequency system according to an embodiment of this application. The structure includes a transmit power monitor 501 and an antenna 502. It can be learned from FIG. 5 that, the first service beam is transmitted by the antenna 502 after passing through a phase shifter, an excitation power amplifier, a final-stage power amplifier, and the transmit power monitor 501. The transmit power monitor 501 records a carrier power of the first service beam (the carrier power is generally an average power of one time calculation unit, where the time calculation unit is generally long, and therefore, the obtained result of the carrier power is rough). In addition, the carrier power is recorded in a second evaluation report, and the second evaluation report is a report generated by the service satellite based on a transmission status of the first service beam.

The ground user terminal receives some or all of the first service beams by using a high-gain antenna and a low-noise receiver. The high-gain antenna is configured to focus energy of a signal of the first service beam into a narrow beam, to receive a signal from the first service satellite antenna and provide a sufficient downlink carrier power. The low-noise receiver is configured to reduce a noise power within a downlink carrier bandwidth.

The ground user terminal receives the first service beam. When the service satellite sweeps, for the r^{th} time (r≥1), an area in which the ground user terminal is located, the ground user terminal receives some or all of the first service beams in a same time period. In addition, based on an operating law of the service satellite and the earth rotation law, each time the service satellite sweeps the ground user terminal, the ground user terminal may receive the first service beams in a same frequency band, or may receive the first service beams in different frequency bands. For example, when the service satellite sweeps the ground user terminal for the second and third times, the ground user terminal may receive information about the frequency band of 140 MHz to 200 MHz of the first service beam, or the ground user terminal may receive information about the frequency band of 140 MHz to 200 MHz for the second time, and receive information about the frequency band of 160 MHz to 370 MHz for the third time.

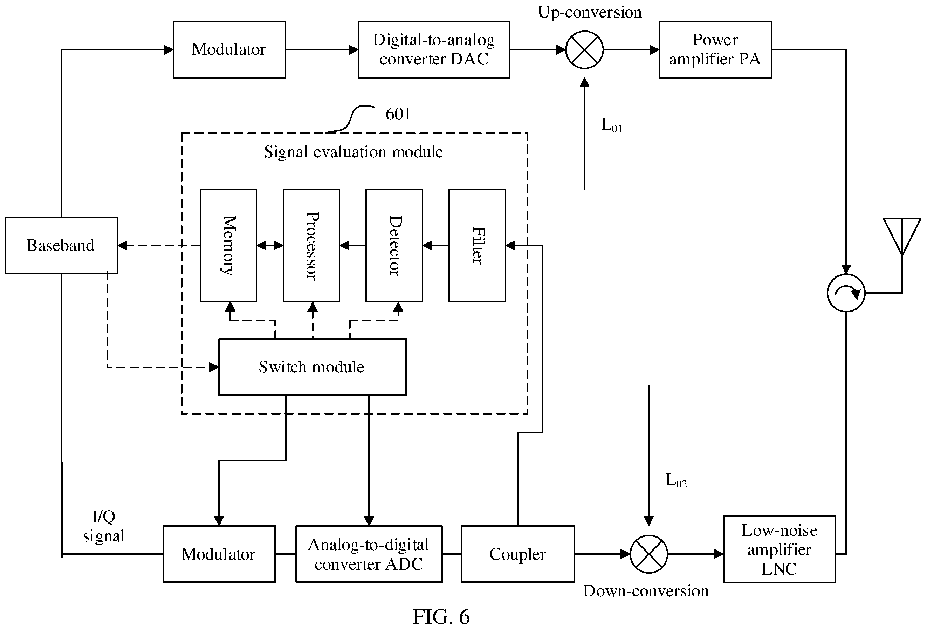

Specifically, a signal evaluation hardware module in the ground user terminal detects attribute information of the first service beam. FIG. 6 is a schematic diagram of a hardware structure of a signal evaluation module according to an embodiment of this application. The hardware structure includes a signal evaluation module 601, and the signal evaluation module 601 is configured to: evaluate downlink beam signal quality and store an evaluation result. It can be learned from FIG. 6 that, after the ground user terminal receives the signal of the first service beam, the signal of the first service beam becomes an intermediate frequency signal after passing through a low-noise amplifier (low-noise amplifier, LNA) and a down-converter. The intermediate frequency signal enters the signal evaluation module through a coupler. A filter of the signal evaluation module obtains, through frequency selection, a signal of a frequency band in which the first service beam is located. After the signal of the frequency band in which the first service beam is located is obtained through frequency selection, a detector detects, from a modulated (the modulation may be a modulation method of amplitude modulation, frequency modulation, and/or phase modulation) signal of the frequency band in which the first service beam is located, information carried in the first service beam (for example, information such as the frequency, the bandwidth, the carrier-to-noise ratio, or the carrier power).

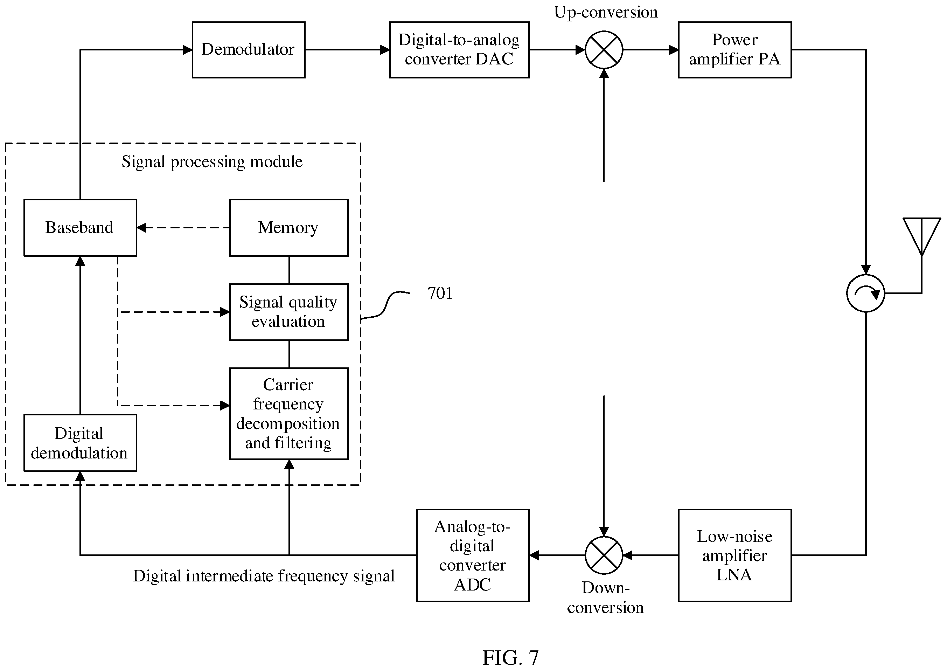

The signal evaluation hardware module is described in detail above. The following provides a software structure corresponding to the signal evaluation hardware module. FIG. 7 is a schematic diagram of a software structure of a signal evaluation module according to an embodiment of this application. The software structure includes a signal evaluation unit 701, and the signal evaluation unit 701 is configured to: evaluate signal quality of a downlink first service beam, and store a result of the evaluation. After the ground user terminal receives the first service beam by using the antenna, the signal of the first service beam becomes a digital intermediate frequency signal after passing through a low-noise amplifier LNA, a down-converter, and an analog digital amplifier ADC. The digital intermediate frequency signal is an input signal of the signal evaluation unit. After the signal passes through a carrier frequency decomposition and filtering unit in FIG. 7, attribute information of the first service beam is obtained. The signal quality evaluation unit evaluates the attribute information of the first service beam, and determines whether the attribute information of the first service beam is abnormal. The evaluation may be evaluating the received attribute information of the first service beam based on a reference threshold or a historical value, and determining whether a target parameter (for example, a carrier power or a carrier ratio) in the attribute information is less than the reference threshold, and whether a difference between the target parameter and the reference threshold is not less than a first threshold. When abnormal attribute information occurs, a signal processing module in the ground user terminal generates a first evaluation report based on the attribute information, and stores the first evaluation report in a storage unit in FIG. 7. A baseband in FIG. 7 controls working states of the storage unit, the signal quality evaluation unit, and the carrier frequency decomposition and filtering unit in the figure by using an enable signal, and reads the abnormal attribute information of the first service beam from the storage unit in FIG. 7. Generally, for the carrier power in the attribute information of the first service beam, the ground monitoring station uses a power spectrum density to display a change relationship between the carrier power of the first service beam, a time, and a frequency.

Table 1 shows some attribute information that is of the first service beam and that is detected by the ground user terminal according to an embodiment of this application.

**Table 1: Some attribute information that is of the first service beam and that is detected by the ground user terminal**

| Beam ID | Time (2020) | Frequency (MHz) | Bandwidth (MHz) | Carrier power (mW) | Carrier-to-noise ratio (dB) |
|---|---|---|---|---|---|
| vcxj01 | 7/15 1:00 PM to 13:01 | 130 to 150 | 20 | 160 | 7 |
| vcxj01 | 7/15 1:01 PM to 13:02 | 150 to 170 | 20 | 200 | 8 |
| vcxj01 | 7/15 1:02 PM to 13:03 | 170 to 190 | 20 | 250 | 4 |
| vcxj01 | 7/15 1:04 PM to 13:05 | 190 to 210 | 20 | 160 | 10 |
| vcxj01 | 7/15 1:05 PM to 13:06 | 210 to 230 | 20 | 290 | 7 |
| vcxj01 | 7/15 1:06 PM to 13:07 | 230 to 250 | 20 | 300 | 8 |
| vcxj01 | 7/15 1:07 PM to 13:08 | 250 to 270 | 20 | 320 | 10 |
| vcxj01 | 7/15 1:08 PM to 13:09 | 270 to 290 | 20 | 300 | 3 |
| vcxj01 | 7/15 1:09 PM to 13:10 | 290 to 310 | 20 | 360 | 9 |

It can be learned from Table 1 that, the ground user terminal detects the frequency, the bandwidth, the carrier power, and the carrier-to-noise ratio of the first service beam within a fixed time (1s is used as an example herein). The carrier power is calculated based on the detected amplitude of the first service beam, and the carrier-to-noise ratio is calculated based on the carrier power and the noise power.

The fixed time for calculating the carrier power may be the same as a time calculation unit of the service satellite radio frequency system, or may be smaller than the time calculation unit of the service satellite radio frequency system (for example, the fixed time is 1s, the time is relatively short, and the carrier power may be considered as the instantaneous carrier power of the first service beam). Therefore, the ground user terminal performs more precise calculation on the carrier power or the carrier-to-noise ratio of the first service beam within a bearable calculation load range, to obtain more abundant and accurate data, thereby improving correctness of the service satellite running status diagnosis.

Step S302: If the attribute information of the first service beam is abnormal, the ground user terminal generates a first evaluation report of the first service beam.

Specifically, the signal evaluation module in FIG. 6 or the signal evaluation unit in FIG. 7 performs evaluation based on the detected attribute information of the first service beam and the reference threshold of the attribute information of the beam (for example, a preset threshold or a historical value of the beam), and obtains an evaluation result. For example, if the target parameter in the attribute information of the first service beam (for example, the carrier power and the carrier-to-noise ratio of the first service beam) is less than the reference threshold and the difference between the target parameter and the reference threshold is not less than the first threshold, it is determined that the attribute information of the beam is abnormal, and the first evaluation report is generated based on the abnormal attribute information (the first evaluation report may include the time, the frequency, the bandwidth, the carrier power, the carrier-to-noise ratio, the abnormal information, and coordinates of the ground on which the ground user terminal is located (which may be a geographical location of the ground user terminal herein)).

For example, the ground user terminal performs evaluation based on the data in Table 1. When a preset threshold of the carrier power of the beam in the time period 7/15 13:01 to 13:02 is 300 mW, a value that is of the beam in the time period 7/15 13:01 to 13:02 and that is detected by the signal evaluation module herein is less than the preset threshold, a difference between the detected value and the historical value is 100 mW, and the difference is greater than the first threshold (for example, the first threshold is set to 80 mW). In this case, the ground user terminal determines that the carrier power of the first service beam in the time period 7/15 13:01 to 13:02 is abnormal. Similarly, when the historical value of the carrier-to-noise ratio of the first service beam in the time period 7/15 13:07 to 13:08 is 12 dB, a value that is of the beam in the time period 7/15 13:07 to 13:08 and that is detected by the signal evaluation module herein is less than the historical value, a difference between the detected value and the historical value is 3 dB, and the difference is greater than the first threshold (for example, the first threshold is set to 1 dB). The carrier-to-noise ratio of the first service beam in the time period 7/15 13:07 to 13:08 is abnormal based on the evaluation result. The ground user terminal generates the first evaluation report based on the evaluation result. Table 2 shows some information in the first evaluation report generated by the ground user terminal based on the attribute information of the first service beam according to an embodiment of this application.

**Table 2: Some information in the first evaluation report generated by the ground user terminal based on the attribute information of the first service beam**

| Beam ID | Time (2020) | Frequency (MHz) | Bandwidth (MHz) | Carrier power (mW) | Carrier-to-noise ratio (dB) | Whether abnormality exists | Abnormal content | Geographical location |
|---|---|---|---|---|---|---|---|---|
| (vcxj01) | 7/10 1:01 PM to 13:02 | 150 to 170 | 20 | 200 | 8 | Yes | The carrier power differs from the preset threshold by 100 mW | 35 degrees south latitude-Canberra |
| (vcxj01) | 7/15 1:09 PM to 13:10 | 290 to 310 | 20 | 360 | 9 | Yes | The carrier-to-noise ratio differs from the historical value by 3 dB | 70 degrees north latitude-Murmansk |

It can be learned from Table 2 that, the ground user terminal evaluates, based on the attribute information that is of the first service beam and that is detected in Table 1, that the attribute information of the beam 1 in the time periods: 7/15 13:07 to 13:08 and 7/15 13:09 to 13:10 is abnormal, and generates the first evaluation report based on the abnormal attribute information. In addition, the ground user terminal generates one first evaluation report based on a detection result that is of the attribute information of the first service beam and that is received once (for example, July 15 in Table 1), or may generate the first evaluation report based on detection results that are of the attribute information of the first service beam and that are received for a plurality of times (for example, July 15, August 15, or September 6).

It should be noted that, the operation performed by the ground user terminal is applicable to any terminal device in a plurality of ground user terminals. The service satellite may transmit a plurality of first service beams synchronously, or may transmit a plurality of service beams asynchronously, and the description of the first service beam in FIG. 3 is also applicable to other first service beams.

Step S303: A plurality of ground user terminals send a plurality of first evaluation reports to a satellite controller.

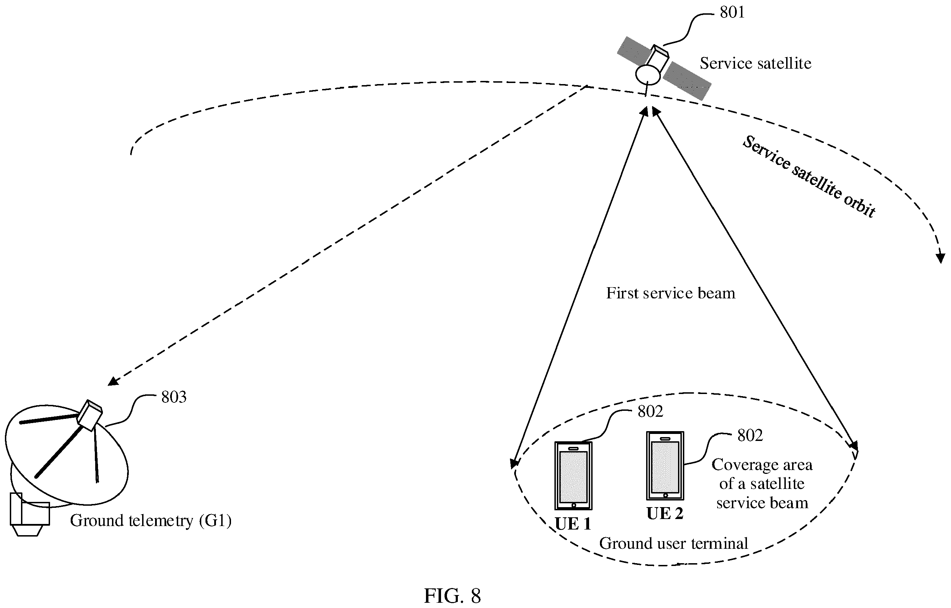

Case 1: If the satellite controller is one satellite, the satellite controller and the service satellite may be the same satellite or two different satellites. The plurality of ground user terminals send a plurality of first evaluation reports to the satellite controller. When the satellite controller and the service satellite may be a same satellite, reference is made to FIG. 8. FIG. 8 is a schematic diagram of another scenario of service satellite running status diagnosis according to an embodiment of this application. The scenario includes a service satellite 801, ground user terminals 802, and a ground monitoring station 803. The service satellite 801 receives the plurality of first evaluation reports of the first service beam that are sent by the plurality of ground user terminals 802. The plurality of first evaluation reports are used by the service satellite 801 to summarize and filter the plurality of first evaluation reports, to generate a diagnosis report of the first service beam, and the diagnosis report is sent to the ground monitoring station.

Case 2: If the satellite controller is a satellite cluster including a plurality of satellites, the service satellite may be a satellite in the satellite cluster, or may not be a satellite in the satellite cluster. The plurality of ground user terminals send the plurality of first evaluation reports to the satellite controller including the plurality of satellites, and any one of the plurality of ground user terminals may send the plurality of first evaluation reports to one satellite controller, or may send the plurality of first evaluation reports to a plurality of satellite controllers.

In the foregoing case 1 and case 2, any one of the plurality of ground user terminals may send one first evaluation report, or may send the plurality of first evaluation reports.

Step S304: The satellite controller receives the plurality of first evaluation reports of the first service beam that are sent by the plurality of ground user terminals.

Step S305: The satellite controller generates a diagnosis report of the first service beam based on the plurality of first evaluation reports.

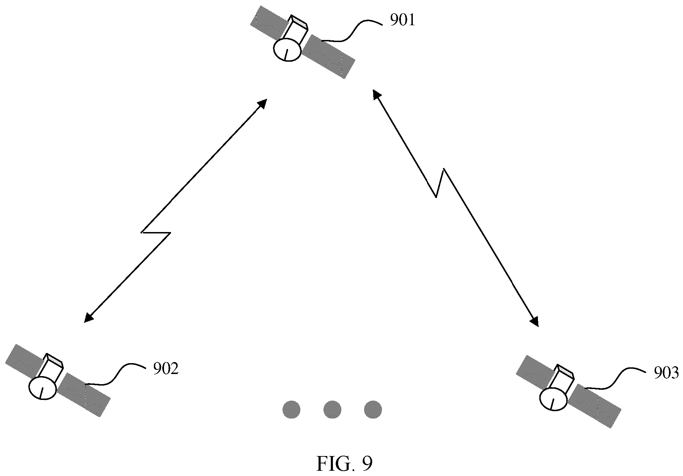

When the satellite controller is a satellite cluster including a plurality of satellites, reference is made to FIG. 9. FIG. 9 is a schematic diagram of a scenario of communication between satellite clusters including a plurality of satellites according to an embodiment of this application. The scenario includes a satellite controller 901, a satellite controller 902, and a satellite controller 903. The satellite controller 901, the satellite controller 902, and the satellite controller 903 receive the plurality of first evaluation reports of the first service beam, and the satellite controllers may perform direct communication or indirect communication.

Direct communication: The satellite controller 902 and the satellite controller 903 directly send the plurality of first evaluation reports to the satellite controller 901.

Indirect communication: The satellite controller 902 sends the received plurality of first evaluation reports to the satellite controller 901, and the satellite controller 903 first sends the received plurality of first evaluation reports to the satellite controller 1002. The satellite controller 1002 forwards, to the satellite controller 901, the plurality of received first evaluation reports sent by the satellite controller 1003.

Specifically, the satellite controller stores external information in a period of time (weather information is used as an example herein). Based on the stored weather information, inclement weather of rainstorm exists in the time period of 2020/7/15 13:00 to 13:30. In the satellite communication technology, when a beam travels to and back from the atmosphere, the beam suffers a propagation loss from the atmosphere (for example, absorption by free electrons and ions in the ionosphere, and absorption and scattering of oxygen molecules, water vapor molecules, and clouds, rain, and snow in the troposphere). Therefore, in the satellite communication process, inclement weather interferes with evaluation of the ground user terminal to some extent. Therefore, the satellite controller filters data in the first evaluation report based on the stored weather information, and filters out data in the inclement weather, to obtain data in non-inclement weather, thereby generating the diagnosis report.

It can be learned that, the foregoing method eliminates a case in which abnormal information occurs on the first service beam due to a weather factor, so that correctness of service satellite running status diagnosis is improved.

In addition, when the satellite controller is not a service satellite, the satellite controller further communicates with the service satellite, to obtain a second evaluation report generated by the service satellite for a transmission status of the first service beam by the service satellite, where the second evaluation report is used to represent the running status of the service satellite.

Step S306: The satellite controller sends the diagnosis report of the first service beam to a ground monitoring station.

Specifically, the satellite controller sends the diagnosis report and/or the second evaluation report to the ground monitoring station, and the ground monitoring station confirms the running status of the service satellite based on the second evaluation report and/or the diagnosis report. For example, when the carrier-to-noise ratio is abnormal, a modulation and transmission system in the service satellite may be faulty.

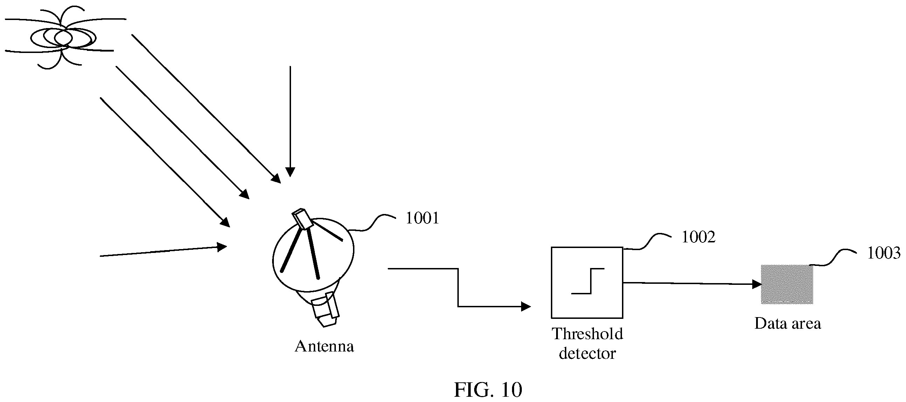

FIG. 10 is a schematic diagram of a scenario in which a ground monitoring station obtains the first evaluation report and the second evaluation report according to an embodiment of this application. The scenario diagram includes a ground monitoring station 1001, a threshold detector 1002, and a data area 1003. The satellite controller sends the diagnosis report and the second evaluation report to the ground monitoring station. The ground monitoring station receives the first evaluation report and the second evaluation report, and receives the first evaluation report and the second evaluation report by using an antenna. Data information of the first evaluation report and the second evaluation report is obtained after the first evaluation report and the second evaluation report pass through the threshold detector and the data area. The diagnosis report is used to confirm the running status of the service satellite, and the second evaluation report is used to represent the running status of the service satellite.

The service satellite may transmit a plurality of first service beams synchronously, or may transmit a plurality of service beams asynchronously, and the description of the first service beam in FIG. 2 is also applicable to any one of the plurality of first service beams.

In the method described in FIG. 2, the plurality of ground user terminals respectively generate the plurality of first evaluation reports based on the abnormal attribute information of the first service beam, so that the running status of the service satellite can be fully reflected, to avoid a problem that a quick monitoring result cannot be obtained because the ground monitoring station does not receive all the beams, share detection pressure of the ground monitoring station for massive satellites and massive beams, and improve efficiency of service satellite running status diagnosis. In addition, the satellite controller filters the plurality of first evaluation reports based on the stored weather factor, and removes data in inclement weather, to obtain the diagnosis report, so that correctness of service satellite running status diagnosis is improved.

The foregoing describes, in detail, the methods in embodiments of this application. The following provides apparatuses in embodiments of this application.

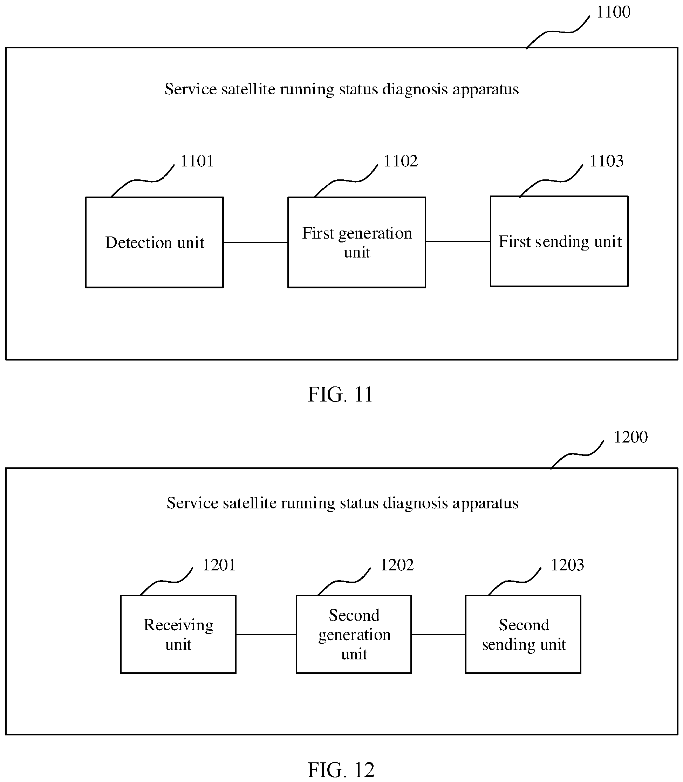

FIG. 11 is a schematic diagram of a structure of a service satellite running status diagnosis apparatus 1100 according to an embodiment of this application. The apparatus 1100 may be the foregoing ground user terminal or a device in the foregoing ground user terminal. The apparatus 1100 may include a detection unit 1101, a first generation unit 1102, and a first sending unit 1103. Detailed descriptions of the units are as follows:

The first service beam detection unit 1101 is configured to detect attribute information of the first service beam, where the attribute information includes one or more of a carrier power, a bandwidth, a carrier-to-noise ratio, and a frequency, and the first service beam is a beam transmitted by a service satellite.

The first generation unit 1102 is configured to: if the attribute information of the first service beam is abnormal, generate a first evaluation report of the first service beam, where the evaluation report includes abnormal information of the first service beam.

The first sending unit 1103 is configured to send the first evaluation report to a satellite controller, where the satellite controller is configured to generate a diagnosis report of the first service beam based on a plurality of first evaluation reports from a plurality of first devices, and the diagnosis report is used by a ground monitoring station to confirm a running status of the service satellite.

In an optional solution of the third aspect, the plurality of evaluation reports are used to describe some or all of abnormal information of a same first service beam.

In another optional solution of the third aspect, the attribute information includes a carrier power, and the detection unit is specifically configured to: detect an amplitude of the first service beam; and calculate the carrier power of the first service beam based on the amplitude of the first service beam.

In another optional solution of the third aspect, the carrier power is an average carrier power, or the carrier power is an instantaneous carrier power.

It can be learned that, compared with an average transmit power detected by a monitoring system of the service satellite, the method can detect the instantaneous carrier power of the first service beam (in this case, a calculation time that is of the carrier power of the beam and that is set by the ground user terminal is short compared with that of the average transmit power, and the carrier power may be considered as the instantaneous carrier power of the beam), so that correctness of service satellite running status diagnosis is improved.

In another optional solution of the third aspect, if a target parameter in the attribute information of the first service beam is less than a reference threshold, and a difference between the target parameter and the reference threshold is not less than a first threshold, the attribute information of the first service beam is abnormal, and the target parameter includes the carrier-to-noise ratio or the carrier power, and the reference threshold is a manually set value or a historical target parameter.

In another optional solution of the third aspect, the sending unit is specifically configured to: if a quantity of evaluation reports of the first service beam reaches a second threshold, send the evaluation report of the first service beam to the satellite controller.

It should be noted that, for implementations of operations, reference may be further made to the corresponding description of the method embodiment shown in FIG. 2. Details are not described herein again.

In the apparatus described in FIG. 11, it can be learned that, the plurality of apparatuses generate the first evaluation reports based on some or all of detected abnormal attribute information of the first service beam, and send the first evaluation reports to the maintenance controller. The maintenance controller generates the diagnosis report based on the received plurality of first evaluation reports, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

FIG. 12 is a schematic diagram of a structure of a service satellite running status diagnosis apparatus 1200 according to an embodiment of this application. The apparatus 1200 may be the foregoing ground user terminal or a device in the foregoing ground user terminal. The apparatus 1200 may include a receiving unit 1201, a second generation unit 1202, and a second sending unit 1203. Detailed descriptions of the units are as follows:

The receiving unit 1201 is configured to receive a plurality of first evaluation reports of a same first service beam that are respectively sent by a plurality of first devices, where the first evaluation report is a report generated by the first device based on the first service beam sent by a service satellite, and the first evaluation report includes abnormal information of the first service beam.

The second generation unit 1202 is configured to generate a diagnosis report of the first service beam based on the plurality of first evaluation reports of the first service beam.

The second sending unit 1203 is configured to send the diagnosis report of the first service beam to a ground monitoring station, where the diagnosis report is used by the ground monitoring station to confirm a running status of the service satellite.

In an implementation, the plurality of evaluation reports are used to describe some or all of abnormal information of a same service beam.

In another implementation, the apparatus further includes: an obtaining unit, configured to obtain, by using a communication link, a second evaluation report that is of the first service beam and that is sent by the service satellite, where the second evaluation report is a report that is generated by the service satellite based on a transmission status of the first service beam and that is used to represent a running status of the service satellite.

In another implementation, the apparatus further includes: a third sending unit, configured to: after the obtaining unit obtains, by using the communication link, the second evaluation report that is of the first service beam and that is sent by the service satellite, send the second evaluation report of the first service beam to the ground monitoring station.

It can be learned that, in the method, the second evaluation report used to represent the running status of the service satellite and the diagnosis report used to confirm the abnormal running status of the service satellite are both sent to the ground monitoring station, so that the running status of the service satellite is analyzed more accurately.

In another implementation, the generation unit is specifically configured to: filter data in the plurality of first evaluation reports of the first service beam based on an external factor, to obtain a target evaluation report; and generate the diagnosis report of the first service beam based on the target evaluation report.

In another implementation, the external factor includes a weather factor, and the target evaluation report is the first evaluation report obtained in non-inclement weather.

It can be learned that, in the method, the first evaluation report in a case of inclement weather is filtered out, and a problem that abnormal information occurs on the first service beam due to a weather factor is eliminated, so that correctness of service satellite running status diagnosis is improved.

In another implementation, the apparatus and the service satellite are a same satellite.

It should be noted that, for implementations of operations, reference may be further made to corresponding description of the method embodiment shown in FIG. 2. Details are not described herein again.

In the apparatus described in FIG. 12, the apparatus generates the diagnosis report based on the received plurality of first evaluation reports that record the abnormal information of the first service beam, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

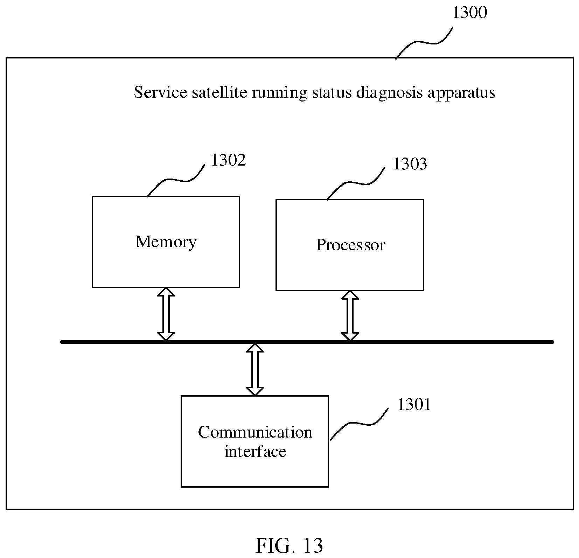

FIG. 13 is a schematic diagram of a structure of a service satellite running status diagnosis apparatus 1300 according to an embodiment of this application. The apparatus 1300 may be the foregoing ground user terminal or a device in the foregoing ground user terminal. The terminal 1300 includes a communication interface 1301, a memory 1302, and a processor 1303. The communication interface 1301, the memory 1302, and the processor 1303 may be connected by using a bus or in another manner. In this embodiment of this application, the connection by using a bus is used as an example.

The communication interface 1301 is used for data communication. The memory 1302 may be a random access memory (random access memory, RAM), a read-only memory (read-only memory, ROM), an erasable programmable read-only memory (erasable programmable read only memory, EPROM), or a compact disc read-only memory (compact disc read-only memory, CD-ROM), and this is not limited. The memory 1304 is configured to store related instructions and data. The processor 1303 may be one or more central processing units (Central Processing Unit, CPU), that is, may be a computing core and a control center of a diagnosis device, and is configured to parse various types of instructions and data inside the diagnosis device. When the processor 1303 is one CPU, the CPU may be a single-core CPU, or may be a multi-core CPU.

The processor 1303 of the apparatus 1300 is configured to read program code stored in the memory 1302, to perform the following operations: detecting attribute information of the first service beam, where the attribute information includes one or more of a carrier power, a bandwidth, a carrier-to-noise ratio, and a frequency, and the first service beam is a beam transmitted by a service satellite; if the attribute information of the first service beam is abnormal, generating a first evaluation report of the first service beam, where the evaluation report includes abnormal information of the first service beam; and sending the first evaluation report to a satellite controller by using a communication interface, where the satellite controller is configured to generate a diagnosis report of the first service beam based on a plurality of first evaluation reports from a plurality of terminals, and the diagnosis report is used by a ground monitoring station to confirm a running status of the service satellite.

In an implementation, the plurality of evaluation reports are used to describe some or all of abnormal information of a same first service beam.

In another implementation, the attribute information includes a carrier power, and the detecting attribute information of the first service beam includes: detecting an amplitude of the first service beam; and calculating the carrier power of the first service beam based on the amplitude of the first service beam.

In another implementation, the carrier power is an average carrier power, or the carrier power is an instantaneous carrier power.

It can be learned that, compared with an average transmit power detected by a monitoring system of the service satellite, the method can detect the instantaneous carrier power of the first service beam (in this case, a calculation time that is of the carrier power of the beam and that is set by the ground user terminal is short compared with that of the average transmit power, and the carrier power may be considered as the instantaneous carrier power of the beam), so that correctness of service satellite running status diagnosis is improved.

In another implementation, if a target parameter in the attribute information of the first service beam is less than a reference threshold, and a difference between the target parameter and the reference threshold is not less than a first threshold, the attribute information of the first service beam is abnormal, and the target parameter includes the carrier-to-noise ratio or the carrier power, and the reference threshold is a manually set value or a historical target parameter. In another implementation, the sending the evaluation report to a satellite controller by using a communication interface includes: if a quantity of evaluation reports of the first service beam reaches a second threshold, sending the evaluation report of the first service beam to the satellite controller by using the communication interface.

It should be noted that, for implementations of operations, reference may be further made to the corresponding description of the method embodiment shown in FIG. 2.

In the apparatus described in FIG. 13, the plurality of apparatuses generate the first evaluation reports based on some or all of detected abnormal attribute information of the first service beam, and send the first evaluation reports to the maintenance controller. The maintenance controller generates the diagnosis report based on the received plurality of first evaluation reports, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

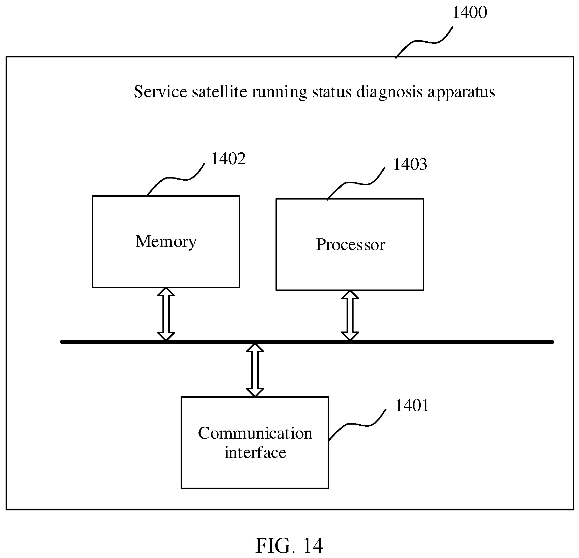

FIG. 14 is a schematic diagram of a structure of a service satellite running status diagnosis apparatus 1400 according to an embodiment of this application. The apparatus 1400 may be the foregoing satellite controller or a device in the foregoing satellite controller. The apparatus 1400 includes a communication interface 1401, a memory 1402, and a processor 1403. The communication interface 1401, the memory 1402, and the processor 1403 may be connected by using a bus or in another manner. In this embodiment of this application, the connection by using a bus is used as an example.

The communication interface 1401 is used for data communication. The memory 1402 may be a random access memory (random access memory, RAM), a read-only memory (read-only memory, ROM), an erasable programmable read-only memory (erasable programmable read only memory, EPROM), or a compact disc read-only memory (compact disc read-only memory, CD-ROM), and this is not limited. The memory 1404 is configured to store related instructions and data. The processor 1403 may be one or more central processing units (Central Processing Unit, CPU), that is, may be a computing core and a control center of a diagnosis device, and is configured to parse various types of instructions and data inside the diagnosis device. When the processor 1403 is one CPU, the CPU may be a single-core CPU or a multi-core CPU.

The processor 1403 of the apparatus 1400 is configured to read program code stored in the memory 1402, and performed operations include: receiving, by using a communication interface, a plurality of first evaluation reports of a same first service beam that are respectively sent by a plurality of first devices, where the first evaluation report is a report generated by the first device based on the first service beam sent by a service satellite, and the first evaluation report includes abnormal information of the first service beam; generating a diagnosis report of the first service beam based on the plurality of first evaluation reports of the first service beam; and sending the diagnosis report of the first service beam to a ground monitoring station by using the communication interface, where the diagnosis report is used by the ground monitoring station to confirm a running status of the service satellite.

In an implementation, the plurality of evaluation reports are used to describe some or all of abnormal information of a same first service beam.

In another implementation, a second evaluation report that is of the service beam and that is sent by the service satellite is obtained by using a communication link, where the second evaluation report is a report that is generated by the service satellite based on a transmission status of the first service beam and that is used to represent a running status of the service satellite.

In another implementation, after the obtaining, by using a communication link, a second evaluation report that is of the first service beam and that is sent by the service satellite, the method further includes: sending the second evaluation report of the first service beam to the ground monitoring station by using the communication interface.

It can be learned that, in the method, the second evaluation report used to represent the running status of the service satellite and the diagnosis report used to confirm the abnormal running status of the service satellite are both sent to the ground monitoring station, so that the running status of the service satellite is analyzed more accurately.

In another implementation, the generating a diagnosis report of the first service beam based on the plurality of first evaluation reports of the first service beam includes: filtering data in the plurality of first evaluation reports of the first service beam based on an external factor, to obtain a target evaluation report; and generating the diagnosis report of the first service beam based on the target evaluation report.

In another implementation, the external factor includes a weather factor, and the target evaluation report is the first evaluation report obtained in non-inclement weather.

It can be learned that, the maintenance controller filters out the first evaluation report in a case of inclement weather and eliminates a problem that abnormal information occurs on the first service beam due to a weather factor, so that correctness of service satellite running status diagnosis is improved.

In another implementation, the satellite controller and the service satellite are a same satellite.

It should be noted that, for implementations of operations, reference may be further made to the corresponding description of the method embodiment shown in FIG. 2.

In the apparatus described in FIG. 14, the apparatus generates the diagnosis report based on the received plurality of first evaluation reports that record the abnormal information of the first service beam, and sends the report to the ground monitoring station. The ground monitoring station does not need to participate in monitoring the first service beam. In addition, a problem that a quick monitoring result cannot be obtained because the ground monitoring station does not receive all the beams is also avoided, detection pressure of the ground monitoring station for massive satellites and massive beams is shared, and efficiency of service satellite running status diagnosis is improved.

An embodiment of this application further provides a computer-readable storage medium. The computer-readable storage medium stores instructions. When the instructions are run on a computer or a processor, the computer or the processor is enabled to perform one or more steps in any one of the foregoing methods. If each component module of the signal processing diagnosis device is implemented in the form of a software functional unit and sold or used as an independent product, the module may be stored in the computer-readable storage medium.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are completely or partially generated. The computer may be a general-purpose computer, a dedicated computer, a computer network, or another programmable diagnosis device. The computer instructions may be stored in a computer-readable storage medium or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid state disk, SSD)), or the like.

In conclusion, by implementing embodiments of this application, the plurality of ground user terminals can detect, based on some or all of the received first service beams transmitted by the service satellite, an abnormality of the attribute information of the some or all of the first service beams, and generate the first evaluation report based on the abnormal attribute information (for example, the carrier power, the carrier-to-noise ratio, the bandwidth, and the frequency), to avoid a problem that a quick monitoring result cannot be obtained because the ground monitoring station does not receive all the beams, share detection pressure of the ground monitoring station for massive satellites and massive beams, and improve efficiency of service satellite running status diagnosis. In addition, compared with the average transmit power detected by the monitoring system of the service satellite, the carrier power in the attribute information in the first evaluation report may be the instantaneous power of the first service beam, so that correctness of service satellite running status diagnosis is improved. In addition, the maintenance controller filters the evaluation report based on the stored weather records, retains attribute information in the evaluation report in non-inclement weather, and eliminates a case in which attribute information abnormality is caused by interference of the weather factor, so that accuracy of the detection result is further enhanced.

A person of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes various media that can store program code, such as a ROM, a RAM, a magnetic disk, or an optical disc. If there is no conflict, the technical features in embodiments and implementations of this application may be randomly combined.

What is disclosed above is merely example embodiments of this application, and certainly is not intended to limit the protection scope of this application. Therefore, equivalent variations made in accordance with the claims of this application shall fall within the scope of this application.

## Claims

1. A service satellite running status diagnosis method, comprising:
detecting, by a first device, attribute information of a first service beam, wherein the attribute information comprises one or more of a carrier power, a bandwidth, a carrier-to-noise ratio, and a frequency, and the first service beam is a beam transmitted by a service satellite; and
if the attribute information of the first service beam is abnormal, generating, by the first device, a first evaluation report of the first service beam, wherein the evaluation report comprises abnormality information of the first service beam;
sending, by the first device, the first evaluation report to a satellite controller, wherein the satellite controller is configured to generate a diagnosis report of the first service beam based on a plurality of first evaluation reports from a plurality of the first devices, and the diagnosis report is used by a ground monitoring station to confirm a running status of the service satellite.

2. The method according to claim 1, wherein the plurality of evaluation reports are used to describe some or all of abnormal information of a same first service beam.

3. The method according to claim 2, wherein the attribute information comprises a carrier power, and the detecting, by a first device, attribute information of a first service beam comprises:
detecting, by the first device, an amplitude of the first traffic beam; and
calculating, by the first device, the carrier power of the first service beam based on the amplitude of the first service beam.

4. The method according to claim 3, wherein
the carrier power is an average carrier power, or
the carrier power is an instantaneous carrier power.

5. The method according to any one of claims 1 to 4, wherein if a target parameter in the attribute information of the first service beam is less than a reference threshold, and a difference between the target parameter and the reference threshold is not less than a first threshold, the attribute information of the first service beam is abnormal, the target parameter comprises the carrier-to-noise ratio or the carrier power, and the reference threshold is a manually set value or a historical target parameter.

6. The method according to claim 5, wherein the sending, by the first device, the first evaluation report to a satellite controller comprises:
if a quantity of evaluation reports of the first service beam reaches a second threshold, sending, by the first device, the evaluation report of the first service beam to the satellite controller.

7. A service satellite running status diagnosis method, comprising:
receiving, by a satellite controller, a plurality of first evaluation reports of a same first service beam that are separately sent by a plurality of first devices, wherein the first evaluation report is a report generated by the first device based on the first service beam sent by a service satellite, and the first evaluation report comprises abnormal information of the first service beam;
generating, by the satellite controller, a diagnosis report of the first service beam based on the plurality of first evaluation reports of the first service beam; and
sending, by the satellite controller, the diagnosis report of the first service beam to a ground monitoring station, wherein the diagnosis report is used by the ground monitoring station to confirm a running status of the service satellite.

8. The method according to claim 7, wherein the plurality of evaluation reports are used to describe some or all of abnormal information of a same first service beam.

9. The method according to claim 7 or 8, wherein the method further comprises:
obtaining, by the satellite controller by using a communication link, a second evaluation report that is of the service beam and that is sent by the service satellite, wherein the second evaluation report is a report that is generated by the service satellite based on a transmission status of the first service beam and that is used to represent a running status of the service satellite.

10. The method according to claim 9, wherein after the obtaining, by the satellite controller by using a communication link, a second evaluation report that is of the service beam and that is sent by the service satellite, the method further comprises:
sending, by the satellite controller, second evaluation report of the first service beam to the ground monitoring station.

11. The method according to any one of claims 7 to 10, wherein the generating, by the satellite controller, a diagnosis report of the first service beam based on the plurality of first evaluation reports of the first service beam comprises:
filtering, by the satellite controller, data in the plurality of first evaluation reports of the first service beam based on an external factor, to obtain a target evaluation report; and
generating, by the satellite controller, the diagnosis report of the first service beam based on the target evaluation report.

12. The method according to claim 11, wherein the external factor comprises a weather factor, and the target evaluation report is the first evaluation report obtained in non-inclement weather.

13. The method according to any one of claims 7 to 12, wherein the satellite controller and the service satellite are a same satellite.

14. A service satellite running status diagnosis apparatus, comprising:
a first receiving unit, configured to receive a first service beam sent by a service satellite;
a detection unit, configured to detect attribute information of the first service beam, wherein the attribute information comprises one or more of a carrier power, a bandwidth, a carrier-to-noise ratio, and a frequency;
a first generation unit, configured to: if the attribute information of the first service beam is abnormal, generate a first evaluation report of the first service beam, wherein the evaluation report comprises abnormal information of the first service beam; and
a first sending unit, configured to send the first evaluation report to a satellite controller, wherein the satellite controller is configured to generate a diagnosis report of the first service beam based on a plurality of first evaluation reports from a plurality of first devices, and the diagnosis report is used by a ground monitoring station to confirm a running status of the service satellite.

15. The apparatus according to claim 14, wherein the plurality of evaluation reports are used to describe some or all of abnormal information of a same first service beam.

16. The apparatus according to claim 15, wherein the attribute information comprises a carrier power, and the detection unit is specifically configured to:
detect an amplitude of the first service beam; and
calculate the carrier power of the first service beam based on the amplitude of the first service beam.

17. The apparatus according to claim 16, wherein
the carrier power is an average carrier power, or
the carrier power is an instantaneous carrier power.

18. The apparatus according to any one of claims 14 to 17, wherein if a target parameter in the attribute information of the first service beam is less than a reference threshold, and a difference between the target parameter and the reference threshold is not less than a first threshold, the attribute information of the first service beam is abnormal, the target parameter comprises the carrier-to-noise ratio or the carrier power, and the reference threshold is a manually set value or a historical target parameter.

19. The apparatus according to claim 18, wherein the sending unit is specifically configured to:
if a quantity of evaluation reports of the first service beam reaches a second threshold, send the evaluation report of the first service beam to the satellite controller.

20. A service satellite running status diagnosis apparatus, comprising:
a second receiving unit, configured to receive a plurality of first evaluation reports of a same first service beam that are separately sent by a plurality of first devices, wherein the first evaluation report is a report generated by the first device based on the first service beam sent by a service satellite, and the first evaluation report comprises abnormal information of the first service beam;
a second generation unit, configured to generate a diagnosis report of the first service beam based on the plurality of first evaluation reports of the first service beam; and
a second sending unit, configured to send the diagnosis report of the first service beam to a ground monitoring station, wherein the diagnosis report is used by the ground monitoring station to confirm a running status of the service satellite.

21. The apparatus according to claim 20, wherein the plurality of evaluation reports are used to describe some or all of abnormal information of a same service beam.

22. The apparatus according to claim 20 or 21, wherein the apparatus further comprises:
an obtaining unit, configured to obtain, by using a communication link, a second evaluation report that is of the first service beam and that is sent by the service satellite, wherein the second evaluation report is a report that is generated by the service satellite based on a transmission status of the first service beam and that is used to represent a running status of the service satellite.

23. The apparatus according to claim 22, wherein the apparatus further comprises:
a third sending unit, configured to: after the obtaining unit obtains, by using the communication link, the second evaluation report that is of the first service beam and that is sent by the service satellite, send the second evaluation report of the first service beam to the ground monitoring station.

24. The apparatus according to any one of claims 20 to 23, wherein the generation unit is specifically configured to:
filter data in the plurality of first evaluation reports of the first service beam based on an external factor, to obtain a target evaluation report; and
generate the diagnosis report of the first service beam based on the target evaluation report.

25. The apparatus according to claim 24, wherein the external factor comprises a weather factor, and the target evaluation report is the first evaluation report obtained in non-inclement weather.

26. The apparatus according to any one of claims 20 to 25, wherein the apparatus and the service satellite are a same satellite.

27. A terminal, comprising a communication interface, a memory, and a processor, wherein the communication interface is used for data communication, the memory is configured to store a computer program, and the processor is configured to run the computer program, so that the terminal performs the service satellite running status diagnosis method according to any one of claims 1 to 6.

28. A satellite controller, comprising: a communication interface, a memory, and a processor, wherein the communication interface is used for data communication, the memory is configured to store a computer program, and the processor is configured to run the computer program, so that the terminal performs the service satellite running status diagnosis method according to any one of claims 7 to 13.

29. A computer-readable storage medium, wherein the computer-readable storage medium comprises a computer program, and when the computer program is configured to be executed by a processor, the processor is enabled to implement the service satellite running status diagnosis method according to any one of claims 1 to 6 or claims 7 to 13.

30. A computer program product comprising instructions, wherein when the computer program product runs on a computer, the method according to any one of claims 1 to 6 or the method according to any one of claims 7 to 13 is performed.

31. A communication system, comprising the apparatus according to any one of claims 14 to 19 and the apparatus according to any one of claims 20 to 26.
